(19) Europäisches Patentamt
European Patent Office
Office européen des brevets

(11) **EP 3 021 383 B1**

(12) **FASCICULE DE BREVET EUROPEEN**

(45) Date de publication et mention de la délivrance du brevet:
**17.05.2017 Bulletin 2017/20**

(51) Int Cl.:
**H01M 2/36** *(2006.01)* **H01M 10/0525** *(2010.01)*
**B21J 15/00** *(2006.01)* **F16B 19/00** *(2006.01)*

(21) Numéro de dépôt: **15193073.2**

(22) Date de dépôt: **04.11.2015**

(54) **PROCEDE POUR RENDRE ETANCHE UN ORIFICE DE CONTENEUR D'ACCUMULATEUR ET CONTENEUR RENDU ETANCHE PAR LEDIT PROCEDE**

VERFAHREN ZUM WASSERDICHTEN ABDICHTEN EINER ÖFFNUNG EINES AKKUMULATORGEHÄUSES, UND DURCH DIESES VERFAHREN ABGEDICHTETES GEHÄUSE

METHOD FOR SEALING AN OPENING OF A BATTERY CONTAINER AND CONTAINER SEALED BY SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.11.2014 FR 1461017**

(43) Date de publication de la demande:
**18.05.2016 Bulletin 2016/20**

(73) Titulaire: **Saft Groupe S.A.**
**93170 Bagnolet (FR)**

(72) Inventeurs:
• **BADET, Sébastien**
 **33520 BRUGES (FR)**
• **ROY, Richard**
 **33600 PESSAC (FR)**

(74) Mandataire: **Hirsch & Associés**
 **137, rue de l'Université**
 **75007 Paris (FR)**

(56) Documents cités:
**DE-T5-112011 105 667     JP-A- 2012 009 288**
**JP-A- 2014 120 389     JP-A- 2014 130 726**
**US-A1- 2014 186 133**

**Description**

DOMAINE TECHNIQUE

L'invention se rapporte au domaine des accumulateurs étanches, en particulier au domaine des accumulateurs de type Lithium-Ion.

La présente invention a pour objet un procédé pour obturer de manière étanche au moyen d'un bouchon, un orifice de remplissage en électrolyte ménagé sur une paroi de conteneur d'accumulateur. L'invention concerne également un conteneur d'accumulateur muni d'un orifice de remplissage, rendu étanche selon ledit procédé.

Un accumulateur étanche ou générateur électrochimique étanche (ces deux termes étant équivalents) comprend de façon connue en soi un conteneur logeant un faisceau électrochimique, lequel faisceau comporte une alternance d'électrodes positives et négatives encadrant des séparateurs. Le faisceau est imprégné d'électrolyte. Chaque électrode est composée d'un collecteur de courant métallique supportant sur au moins une de ses faces une matière électrochimiquement active. L'électrode est connectée électriquement à une borne de sortie de courant qui assure la continuité électrique entre l'électrode et l'application extérieure à laquelle l'accumulateur est associé. Le faisceau d'électrodes est disposé dans le conteneur fermé de manière étanche par un couvercle. Lors de la fabrication du conteneur, il est généralement prévu de remplir ce dernier d'électrolyte au moyen d'un orifice ménagé dans la paroi du conteneur. Une fois le remplissage effectué, il est nécessaire d'obturer de manière étanche cet orifice.

En effet, l'une des fonctions du conteneur est de contenir toute fuite d'électrolyte ou de matériau qui pourrait s'échapper de l'accumulateur et qui de ce fait pourrait se répandre dans la zone environnant l'accumulateur. L'électrolyte peut être de l'acide dans le cas d'accumulateurs plomb-acide ou être une base forte telle que KOH, LiOH ou NaOH dans le cas d'accumulateurs alcalins. Il s'agit d'un solvant organique dans le cas d'accumulateur Li-Ion. Afin d'éviter que l'espace environnant l'accumulateur ne soit pollué, il est donc nécessaire que le conteneur soit étanche aux liquides et que l'orifice de remplissage en électrolyte soit parfaitement obturé.

ETAT DE LA TECHNIQUE

Il est connu du document CN102299273 un ensemble d'étanchéité destiné à obturer de façon étanche le montage d'une borne d'accumulateur. Cet ensemble comprend un presse-étoupe du type vis-écrou (et non un rivet) pour assurer la fixation dudit ensemble sur le couvercle de la batterie. Toutefois l'ensemble présente des risques de désassemblage qui entachent la fiabilité de son étanchéité.

Il est connu du document EP685895 un autre ensemble d'étanchéité destiné à rendre étanche une borne de batterie. Cet ensemble comprend un rivet creux qui assure la fixation dudit ensemble sur le couvercle de la batterie. Un joint assure quant à lui l'étanchéité entre le rivet et le couvercle. L'ensemble comporte également une soupape de sécurité qui obture un perçage radial et qui est maintenue par le capuchon de la borne, le capuchon étant soudé à la tête du rivet creux. Dans ce cas précis, l'obturation de l'orifice pratiqué dans le couvercle de l'accumulateur est assurée au moins par deux pièces en plus du rivet, soit la soupape et le capuchon. De plus, la fixation des moyens d'obturation est assurée par une opération de soudage. De ce fait, cet ensemble présente un nombre de pièces et d'opérations d'assemblage important.

Le document US4215187 décrit une étanchéité pratiquée au niveau d'une paroi de conteneur d'accumulateur au moyen de la tête du rivet et en conjonction avec une bague d'étanchéité qui l'entoure. Ce système d'étanchéité nécessite toutefois une pièce en supplément du rivet, soit la bague d'étanchéité. De plus, ce type de pièce est généralement sujet à une usure et à un vieillissement plus rapide que celle de l'accumulateur en soi.

Le document US4006282 décrit un dispositif d'étanchéité pour des bornes de sortie de courant d'accumulateur au plomb nécessitant également une pièce en supplément du rivet, afin d'assurer l'étanchéité.

Le document DE-T5-112011105667 a trait à une batterie avec un corps de batterie comprenant un trou débouchant et qui est conçue de sorte que le trou débouchant du corps de batterie est hermétiquement fermé au moyen d'un rivet et d'un joint.

De manière à pallier tout ou partie des inconvénients exposés précédemment, l'invention se propose d'obturer l'orifice d'une paroi de conteneur de manière fiable et simple, en limitant le nombre de pièces et d'étapes.

RESUME DE L'INVENTION

A cet effet l'invention propose un procédé pour obturer de manière étanche au moyen d'un bouchon un orifice de remplissage ménagé sur une paroi d'un conteneur, ledit bouchon comprenant :

- un tube, ledit tube étant doté en l'une de ses extrémités d'une collerette ayant une face supérieure pouvant servir à recevoir un nez de riveteuse et une face inférieure pouvant servir à recouvrir l'orifice, et

- un clou pourvu d'une tige et d'une tête, la tige étant logée dans le tube et la tête étant située à une extrémité du clou opposée à la collerette, ladite tête du clou ayant une section transversale comprise entre la section transversale intérieure et la section transversale extérieure du tube au niveau de la tige, le matériau constituant la tige admettant une dureté supérieure ou égale à trois fois la dureté du matériau constituant le tube et le matériau constituant la paroi du conteneur admettant une dureté supérieure ou égale à 1,3 fois celle du tube,

ledit procédé comprenant les étapes consistant à :

- introduire le bouchon à l'intérieur de l'orifice, la section transversale de l'orifice étant supérieure à la section transversale extérieure du tube de manière à définir volontairement un espace entre la paroi de l'orifice et la paroi extérieure du tube,

- positionner en butée le nez de la riveteuse contre la face supérieure de la collerette du bouchon,

- actionner la riveteuse de manière à exercer une traction sur la tige du clou, le nez de la riveteuse maintenant le tube à l'intérieur de l'orifice, et ce de manière à :

> provoquer l'expansion du tube contre la paroi de l'orifice par l'entrée et la progression de la tête du clou dans le tube et,
> combler l'espace entre la paroi de l'orifice et la paroi extérieure du tube par le maintien de la tête du clou dans le tube au niveau de la paroi du conteneur.

Des caractéristiques optionnelles de l'invention, complémentaires ou de substitution, sont énoncées ci-après.

Le procédé peut comporter une étape supplémentaire consistant à rompre la tige du bouchon, après avoir au moins positionné en butée le nez de la riveteuse contre la face supérieure de la collerette du bouchon, l'effort de rupture de la tige étant supérieure à l'effort résultant de l'entrée et de la progression de la tête du clou dans le tube et la section de la riveteuse étant inférieure à la section de la tête du clou.

L'espace avant l'expansion du tube correspond à la différence entre le diamètre de l'orifice et le diamètre extérieur du tube, celle-ci pouvant être supérieure à 0,05 mm.

La tige peut comporter une zone de fragilisation de section transversale inférieure à la section transversale moyenne de la tige, de sorte que la rupture de la tige intervient au niveau de ladite zone de fragilisation, pour des efforts de traction inférieurs à $Rm41 * s41'$, $s41'$ étant la section transversale de la tige après rupture en traction et $Rm41$ étant la résistance mécanique à la rupture en traction de la tige.

La tige peut être en acier, tandis que le tube peut être en alliage d'aluminium, de préférence en alliage d'aluminium de série 1000.

Le tube peut être obturé en son extrémité opposée à la collerette par un opercule.

La tête du clou peut s'étendre suivant une longueur comprise entre 80% et 150% de la somme entre l'épaisseur de la paroi du conteneur et l'épaisseur de la collerette.

La face du nez de la riveteuse et la surface de la collerette du bouchon peuvent être planes.

La face du nez de la riveteuse peut comprendre une partie saillante de forme complémentaire à un évidement pratiqué sur la surface de la collerette du bouchon.

La paroi du conteneur peut admettre une épaisseur comprise entre 1 mm et 3 mm et préférablement entre 1,8 mm et 2,5 mm.

Le conteneur peut être en aluminium.

Les sections transversales respectivement du tube, de la tige, de la tête du clou et de l'orifice peuvent être elliptiques.

Les sections transversales respectivement du tube, de la tige, de la tête du clou et de l'orifice peuvent être circulaires.

Le diamètre de l'orifice peut être compris entre 3,25 mm et 3,7 mm.

La paroi du conteneur peut être un couvercle de conteneur d'accumulateur, l'orifice de remplissage étant un orifice de remplissage en électrolyte.

L'accumulateur peut être un accumulateur de type Lithium-Ion.

Le bouchon et le conteneur peuvent vérifier les relations ci-après :

- $s41 < s30int < s42 < s30ext < s12$
- $s42 - s41 > s12 - s30ext$
- $Rm41 * s41' > 7 * Rm30 * e * (s42 - s41 + s30ext - s12)/2 + 0.9\, Rm30 * (s30ext - s41)$

Avec : $s_{41}$, $s_{41'}$, $s_{30int}$, $s_{42}$, $s_{30ext}$, $s_{12}$ étant respectivement les sections transversales de la tige avant et après rupture en traction, du tube intérieur, de la tête du clou, du tube extérieur, de l'orifice, e étant l'épaisseur du conteneur, $Rm_{30}$ et $Rm_{41}$ étant la résistance mécanique à la rupture en traction

Le bouchon peut n'être constitué que du tube et du clou.

L'invention a également pour objet un conteneur d'accumulateur muni d'un orifice de remplissage d'électrolyte, caractérisé en ce que l'orifice de remplissage est obturé de manière étanche vis-à-vis des liquides et des gaz au moyen d'un procédé conforme à l'un quelconques des modes de réalisations de l'invention.

D'autres particularités et avantages de la présente invention apparaîtront à la lecture de la description développée ci-après et sur la base d'exemples de réalisation non limitatifs, et en référence aux dessins annexés.

DESCRIPTION DES FIGURES

La figure 1 est une représentation schématique d'une coupe transversale d'un conteneur d'accumulateur doté d'un orifice de remplissage en électrolyte, ladite représentation correspondant à la première étape du procédé d'obturation, selon un mode d'exécution de l'invention.

La figure 2 est une représentation schématique d'une coupe transversale d'un conteneur d'accumulateur doté d'un orifice de remplissage en électrolyte, ladite représentation correspondant à l'issue de la dernière étape du procédé d'obturation selon un mode d'exécution de l'invention.

La figure 3A est une représentation schématique d'une coupe transversale d'un conteneur d'accumulateur doté d'un orifice de remplissage en électrolyte, ladite représentation correspondant à l'issue de la dernière étape du procédé d'obturation, selon un certain mode d'exécution de l'invention.

La figure 3B est une représentation schématique d'une coupe transversale d'un conteneur d'accumulateur de batterie doté d'un orifice de remplissage en électrolyte, ladite représentation correspondant à l'issue de la dernière étape du procédé d'obturation selon un autre mode d'exécution de l'invention.

Les figures 4 à 8 sont des courbes correspondant à des résultats d'essais.

Pour des raisons de clarté, les dimensions des différents éléments représentés sur ces figures ne sont pas nécessairement en proportion avec leurs dimensions réelles. Des références identiques dans les figures correspondent aux mêmes pièces représentées.

EXPOSE DE MODES DE REALISATION

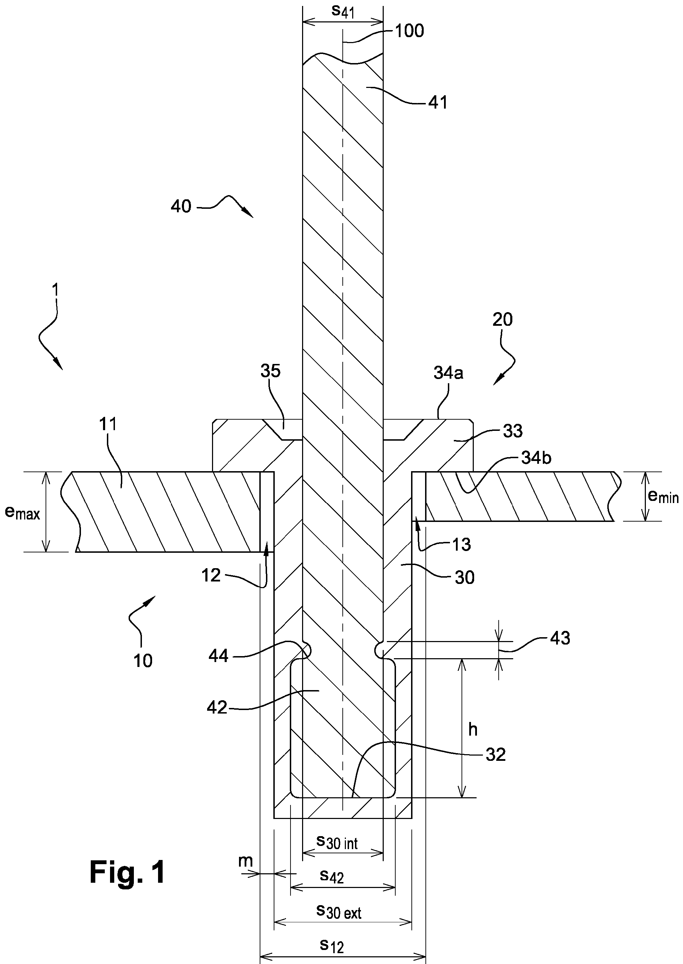

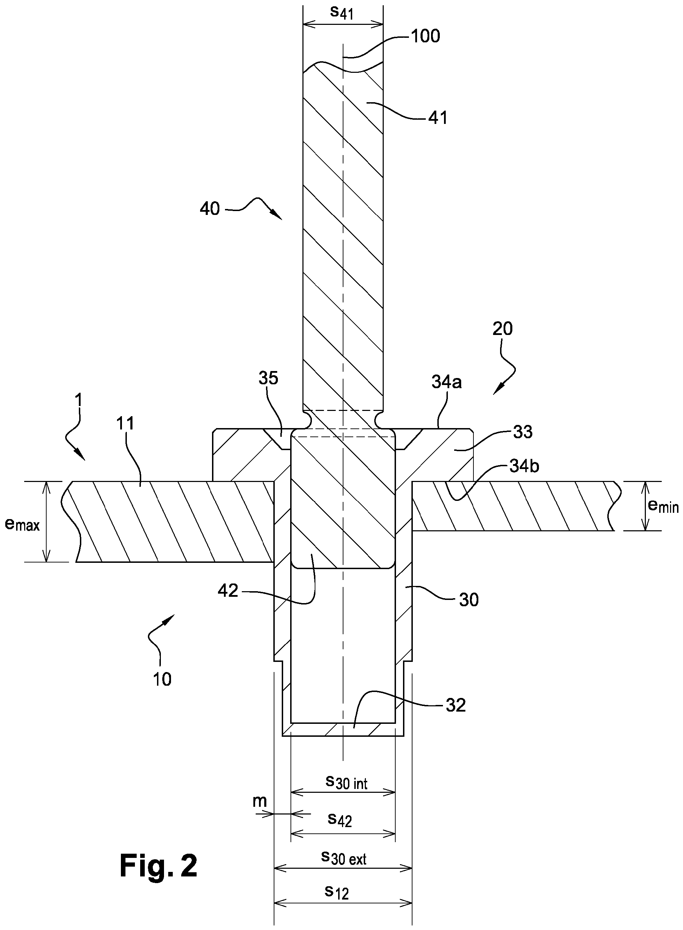

Sur les figures 1 et 2, on a représenté suivant une coupe longitudinale par l'axe 100 une paroi 11 d'un conteneur 1, ladite paroi étant percée d'un orifice 12 de section $s_{12}$. Cet orifice permet de remplir le conteneur 1.

Aussi bien sur la figure 1 que sur la figure 2, l'orifice accueille un bouchon 20 comprenant tube 30 s'étendant suivant un axe longitudinal 100, de section nominale extérieure $s_{30ext}$ et de section nominale intérieure $s_{30int}$. On entend par « section nominale extérieure » la section moyenne du tube, définie par le contour extérieur du tube, vu suivant une coupe transversale passant par un plan perpendiculaire à l'axe longitudinal 100. On entend par « section nominale intérieure » la section moyenne du tube, définie par le contour intérieur du tube, vu suivant une coupe transversale passant par un plan perpendiculaire à l'axe longitudinal 100. Le tube est doté en l'une de ses extrémités d'une collerette 33 dont la face inférieure 34b est adaptée pour recouvrir l'orifice et dont la face supérieure 34a est adaptée à recevoir un nez 50 de riveteuse. On entend par « adaptée pour recouvrir l'orifice » le fait que la face inférieure 34b de la collerette est en grande partie en appui contre la surface extérieure de la paroi du conteneur. On entend par « adaptée pour recevoir un nez de riveteuse », le fait que la face extérieure 34a de la collerette peut coopérer en contact frontal avec un nez de riveteuse.

Sur la figure 1, on a représenté suivant une coupe longitudinale le bouchon positionné dans l'orifice avant d'avoir mis en oeuvre le procédé pour obturer de manière étanche le conteneur. La section transversale de l'orifice 12 est supérieure à la section nominale extérieure $s_{30ext}$ du tube 30 de manière à définir volontairement un espace ou jeu m entre la paroi de l'orifice 12 et la paroi extérieure du tube 30. Le bouchon comprend un clou 40 constitué d'une tige 41 s'achevant en l'une de ses extrémités par une tête 42. Le clou est logé dans le tube, de sorte que la tête du clou est située au niveau de l'extrémité du tube opposée à la collerette et de sorte que la tige s'étend en dehors du tube du côté de la collerette.

Selon une première variante non représentée en figure 1, la tête du clou peut s'étendre totalement ou du moins partiellement en dehors du tube.

Selon une seconde variante représentée en figure 1, la tête du clou peut être logée à l'intérieur du tube.

Dans tous les cas, la section $s_{42}$ de la tête est inférieure à la section nominale extérieure $s_{30ext}$ du tube, de manière à permettre la progression de la tête à l'intérieur du tube. De même, la section $s_{42}$ de la tête est supérieure à la section nominale intérieure $s_{30int}$ du tube, de sorte que la progression de la tête à l'intérieur du tube provoque son expansion. La section $s_{41}$ de la tige est inférieure à la section nominale intérieure du tube. Les relations entre les sections peuvent s'énoncer de la façon suivante : $s41 < s30i_{nt} < s42 < s30_{ext} < s12$.

Sur la figure 2, on a représenté suivant une coupe longitudinale la paroi du conteneur de la figure 1 et son bouchon toujours positionné dans l'orifice, mais après avoir mis en oeuvre le procédé d'obturation. La tête 42 du clou a progressé à l'intérieur du tube jusqu'à atteindre une position au niveau de l'orifice 12 et de manière à provoquer l'expansion du tube. Le jeu m défini entre la paroi de l'orifice et la surface périphérique extérieure 13 du bouchon, est dès lors comblé.

Le procédé d'obturation selon l'invention comporte les étapes consistant à :

- introduire le bouchon 20 à l'intérieur de l'orifice 12,
- positionner en butée le nez 50 d'une riveteuse contre la face supérieure 34a de la collerette 33 du bouchon 20,
- actionner la riveteuse de manière à exercer une traction sur la tige 41 du clou 40.

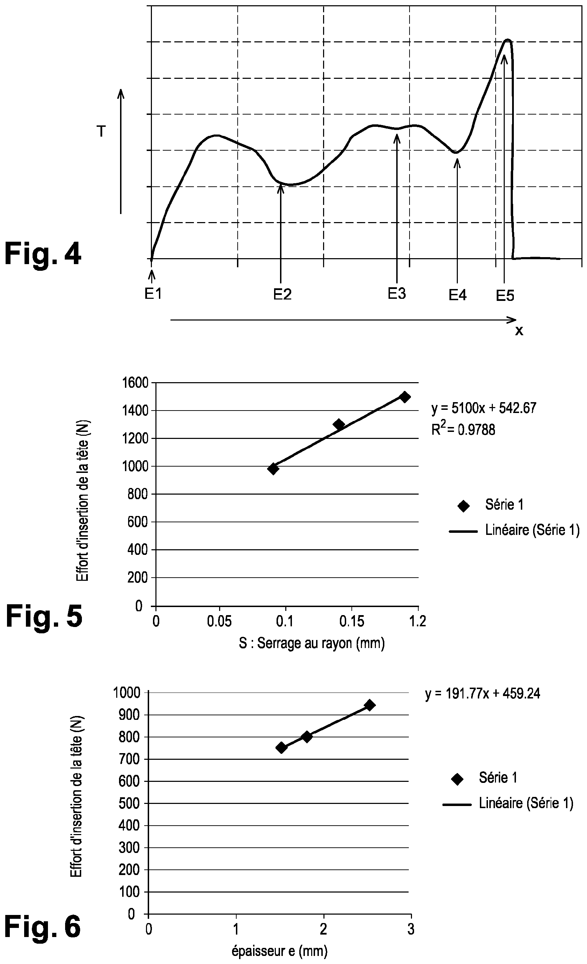

La figure 4 représente une courbe d'efforts T appliqués à la tige au cours des différentes étapes du procédé. Le cheminement de la position E1 à la position E2 correspond à l'insertion de la tête du clou dans le tube, soit l'insertion de la tête du clou à l'intérieur de la section nominale du tube $s30_{int}$. Le cheminement de la position E2 à la position E4 correspond à la progression de la tête du clou dans le tube avec un pic en E3 correspondant à l'effort maximum d'insertion de la tête du clou dans l'épaisseur de la paroi 11. En E4, la tête du clou arrive en butée contre le nez de la riveteuse et l'effort s'accroit jusqu'à la rupture de la tige en E5.

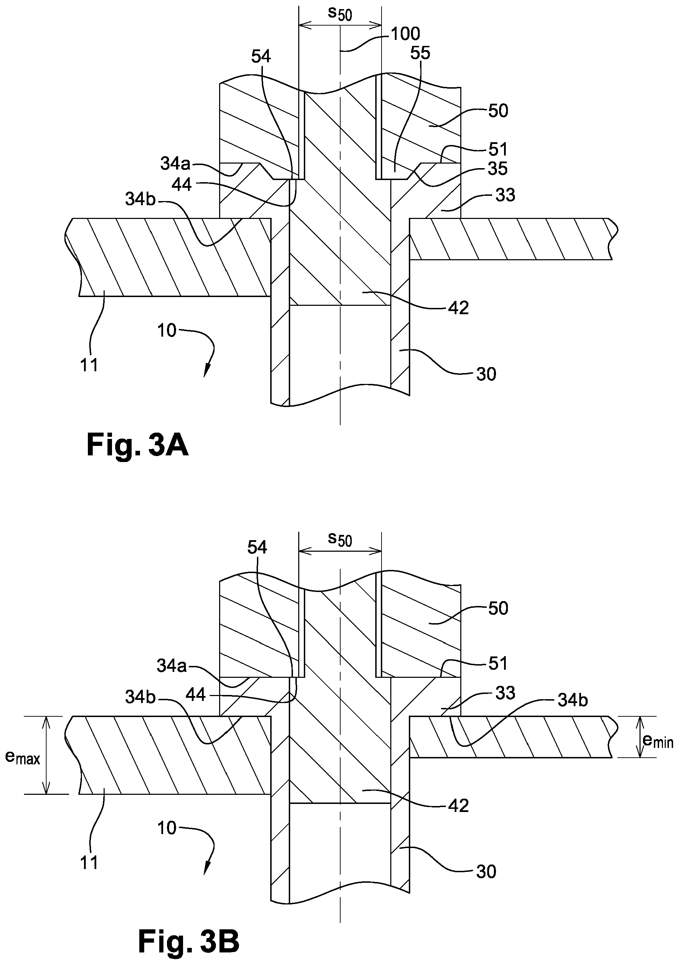

Tel que représenté sur les figures 3A et 3B, le nez 50 de la riveteuse maintient la collerette contre la paroi extérieure du conteneur tube 30.

Selon un mode de réalisation représenté en figure 3B, la face 51 du nez 50 de la riveteuse et la face extérieure 34a de la collerette 33 sont planes, de sorte que la mise en contact des deux faces est aisée.

Selon un autre mode de réalisation représenté en figure 3A, la face 51 du nez 50 de la riveteuse comprend une partie saillante 55 de forme complémentaire à la forme d'un évidement 35 pratiqué dans la collerette 33. De cette façon, les déplacements suivant un axe perpendiculaire à l'axe longitudinal 100, du nez de la riveteuse par rapport à la collerette sont verrouillés. Cette complémentarité de forme permet non seulement une mise en contact aisée des deux faces mais aussi le maintien dudit contact et le non-dépassement de la tige 41 après sa rupture par rapport à la face 34a, protégeant ainsi le bouchon d'éventuels chocs.

La traction de la riveteuse sur la tige provoque en premier lieu l'entrée de la tête du clou à l'intérieur de la portion de tube correspondant à la section nominale intérieure $s30_{int}$. Puis, la progression de la tête du clou à l'intérieur du tube provoque l'expansion du tube contre la paroi de l'orifice. De ce fait, l'espace ou jeu m entre la paroi de l'orifice 12 et la paroi extérieure du tube 30 disparaît. On entend par expansion, l'opération qui consiste à élargir le tube par déformation plastique. Dans le cas d'un tube de section circulaire, le diamètre extérieur du tube s'agrandit tout comme le diamètre intérieur tandis que l'épaisseur dudit tube diminue.

De manière à ce que la surface extérieure du tube reste plaquée contre la paroi de l'orifice sans laisser de place à un moindre jeu, la progression de la tête 42 du clou dans le tube s'achève lorsque ladite tête se trouve au niveau de la paroi du conteneur. De cette façon la tête du clou maintient l'étanchéité au niveau du contact entre la paroi de l'orifice et le tube et obture l'intérieur du tube de façon à empêcher toute communication entre l'intérieur du conteneur et l'extérieur. La progression de la tête 42 du clou s'achève lorsque la tête du clou arrive en butée contre le nez de la riveteuse. Plus précisément, la section $s_{42}$ de la tête du clou est supérieure à la section $s_{41}$ de la tige de manière à former un épaulement 44 contre lequel bute une portion 54 du nez de la riveteuse. De même, la section $s_{50}$ du nez de la riveteuse est inférieure à la section $s_{42}$ de la tête du clou.

De manière à ce que la tête de clou puisse arriver au niveau de la paroi du conteneur, il est nécessaire que la tige ne se casse pas sous les efforts de traction.

De ce fait, le matériau constituant la tige 41 admet une dureté supérieure ou égale à trois fois la dureté du matériau constituant le tube 30 et le matériau constituant la paroi du conteneur admet une dureté supérieure ou égale à 1,3 fois celle du tube 30. Le tableau ci-après liste un certain nombre d'alliages possibles pour le tube et le conteneur :

|  | Dureté Brinell HB |
|---|---|
| Paroi Aluminium 1100-H14 | 32 |

(suite)

|  | Dureté Brinell HB |
|---|---|
| tube Aluminium 1100-O | 23 |
|  |  |
| clou acier | 165 |
| clou Aluminium 7075 T651 T62 | 160 |
| clou acier inox | 80 |

De plus, des essais détaillés ci-après ont établi que l'espace m entre la paroi de l'orifice 12 et la paroi extérieure du tube 30 avant son expansion est préférablement supérieur à 0,025 mm.

En effet, afin de permettre le remplissage de l'espace m entre le tube et la paroi de l'orifice, il est nécessaire d'avoir un serrage au rayon, S, strictement supérieur à zéro. Le serrage au rayon correspond à la différence entre le jeu du bouchon par rapport à la paroi et l'augmentation du diamètre du tube lors de la l'expansion, cette augmentation étant due à la différence de diamètre entre le diamètre intérieur du tube et le diamètre de la tête du clou. Dans le cas où le bouchon et l'orifice admettent des sections circulaires, on obtient la condition suivante :

$$(\emptyset_{\text{tube-ext}} + (\emptyset_{\text{tête du clou}} - \emptyset_{\text{tube-int}}) - \emptyset_{\text{orifice}}) / 2 > 0$$

Afin de garantir une étanchéité suffisante, sans induire de déformation et de contrainte trop élevées dans le bouchon, le serrage au rayon doit préférentiellement être compris entre 0,05 mm et 0,4 mm.

Ceci implique un espace minimum m de 0,025 mm qui correspondant à un jeu minimum au diamètre avant l'expansion égal à $\emptyset_{\text{orifice}}$ - $\emptyset_{\text{tube-ext}}$ = 0,05 mm.

Pour un tube de diamètre extérieur $\emptyset_{\text{tube-ext}}$ de 3.2 mm, la plage de diamètre de l'orifice pouvant être utilisé est située entre 3,25 et 3,7 mm soit +1.5% à +15% par rapport au diamètre extérieur du tube. Dans ce cas, la tige pourra admettre un diamètre de 1,8 mm et la tête du clou, un diamètre de 2,4 mm.

Afin d'assurer l'insertion de la tête du clou dans l'épaisseur du tube sans que la tige ne casse prématurément, il a été établit de manière empirique la relation (A) que doivent vérifier le bouchon et le conteneur :

$$R_{m41} * s_{41'} > 7 * R_{m30} * e * (s_{42} - s_{41} + s_{30\text{ext}} - s_{12})/2 + 0.9\, R_{m30} * (s_{30\text{ext}} - s_{41})$$

Avec :

- $s_{41}$, $s_{41'}$, $s_{30\text{int}}$, $s_{42}$, $s_{30\text{ext}}$, $s_{12}$ étant respectivement les sections transversales de la tige avant et après rupture en traction, du tube intérieur, de la tête du clou, du tube extérieur, de l'orifice,
- e étant l'épaisseur du conteneur,
- $R_{m30}$ et $R_{m41}$ étant la résistance mécanique à la rupture en traction respectivement du tube et de la tige.

Pour établir cette relation, il a été considéré que :

$R_{m41} * s_{41'} > 7 * R_{m30} * e *$serrage au rayon S + effort de sertissage à vide, sachant que l'effort de sertissage à vide est égal à $0.9\, R_{m30} * (s_{30\text{ext}} - S_{41})$.

Les coefficients 7 et 0,9 ont été établis de manière empirique au moyen d'essais de traction, en prenant en compte les frottements entre la tête du clou et le tube, ces derniers s'apparentant aux frottements entre l'acier et l'aluminium. La vitesse appliquée à la machine de traction était de 10 mm/min.

Afin d'être conservatif, la résistance à la rupture du tube est considérée en supposant que la loi d'évolution de la contrainte suivant la déformation du tube dans le domaine plastique est une constante égale à la limite à rupture.

Un coefficient de 1,2 au minimum peut être ajouté à l'estimation de l'effort de rupture nécessaire afin de pallier une variation des caractéristiques mécaniques des pièces de 20%.

La relation empirique que doivent vérifier le bouchon et le conteneur a été validée entre autre par les essais décrits ci-après et illustrés aux figures 5 à 8.

Sur la figure 5, on a représenté l'évolution de l'effort d'insertion de la tête du clou en fonction du serrage au rayon S. Les essais ont été réalisés à une vitesse de traction de 10 mm/min sur un tube en Aluminium de grade 1100 à l'état recuit, la tige étant en acier et le conteneur étant en aluminium avec une épaisseur de 1.8 mm et un orifice de diamètre égal à 3.4 mm. Le diamètre de la tête du clou est la variable, ce qui a permis de modifier la valeur de serrage. La figure 5 fait apparaître la linéarité entre le serrage S et l'effort d'insertion de la tête du clou, l'ordonnée à l'origine correspondant à l'effort d'insertion à vide.

La figure 6 montre l'évolution de l'effort d'insertion de la tête du clou en fonction de l'épaisseur e du conteneur. Les essais ont été réalisés avec un tube en Aluminium de grade 1100 à l'état recuit et avec un serrage de 0.19 mm. La figure 6 fait apparaître la linéarité entre l'épaisseur du couvercle et l'effort d'insertion de la tête du clou, l'ordonnée à l'origine correspondant à l'effort d'insertion à vide.

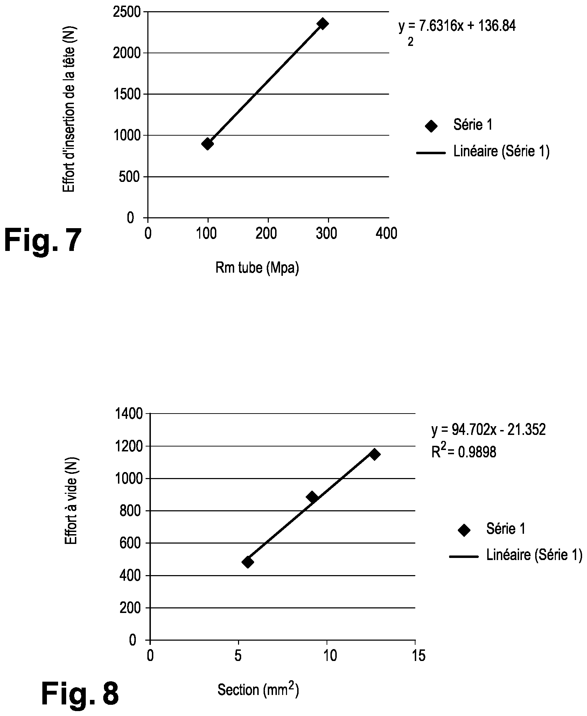

La figure 7 montre l'évolution de l'effort d'insertion en fonction de la résistance à la rupture du tube $R_{m30}$. Les essais ont été réalisés avec une épaisseur e de couvercle de 1.8 mm et un serrage de 0.19 mm. Deux tubes ont été testés, l'un en Aluminium de grade 1100 à l'état recuit avec une résistance à la rupture estimée à 100 MPa et l'autre en Aluminium de grade 5056 à l'état recuit avec une résistance à la rupture estimée à 290 MPa. La figure 7 fait apparaître une ordonnée à l'origine faible dans le cas d'une approximation par une courbe linéaire, ce qui correspond à la relation établie empiriquement entre le bouchon et le conteneur.

La figure 8 montre l'évolution de l'effort d'expansion à vide en fonction de l'épaisseur du tube. Des essais ont été réalisés sur trois tubes en Aluminium de grade 1100 à l'état recuit et expansés sans force de serrage, ces tubes présentant des diamètres de tube et tige différents.

| Echantillons | 1 | 2 | 3 |
|---|---|---|---|
| Ø tube | 3.2mm | 4 | 4.8mm |
| Ø tige | 1.8mm | 2.1 | 2.65mm |
| Section entre Ø tube et Ø tige | 5.5mm$^2$ | 9.1mm$^2$ | 12.6mm$^2$ |

La figure 8 fait apparaître la linéarité entre l'épaisseur du tube et l'effort d'expansion à vide.

La relation empirique (A) que doivent vérifier le bouchon et le conteneur a été également vérifiée avec un tube en Aluminium de grade 1100 à l'état recuit (Rm = 100 MPa), un orifice de diamètre 3.35 mm, une section de tige de 1,23 mm$^2$, soit un diamètre réduit à 1,25 mm, une épaisseur de conteneur de 1,8 mm et un serrage au rayon S de 0,225 mm.

L'effort d'insertion totale de la tête du clou dans l'épaisseur du couvercle est estimée à : 7 x 100 x 1.8 x 0.225 + 0.9 x 100 x (n x 3,2$^2$/4 - $\pi$ x 1,8$^2$/4) = 778 N incluant un effort à vide de 495 N.

La matière de la tige devra donc être choisie avec une limite mécanique à la rupture en traction de 635 MPa minimum afin d'obtenir un effort de casse de tige estimé au minimum à 635 MPa x 1.23mm$^2$ = 780 N, effort supérieur à l'effort d'insertion de tête de tige.

Avec l'ajout de la marge de 20%, l'effort de rupture à garantir est de 934 N soit un choix de matière avec une limite à rupture au minimum de 934 / 1,23 = 760 MPa.

Des essais ont été réalisés dans ces conditions, l'erreur de la relation empirique (A) est estimée à :

| Configuration | | Effort | essai | Estimation relation A | *Erreur* |
|---|---|---|---|---|---|
| 1 | $E_{conteneur}$ 1,8mm | A vide | 480N | 495N | *3%* |
| | $Rm_{corps\ du\ bouchon}$=100Mpa pour A11100 état recuit Serrage S=0,225 Øbouchon=3,2 Øtige=1,8 | Insertion totale de la tête de tige dans l'épaisseur du conteneur | 777N | 778N | *0,1%* |
| 2 | $E_{conteneur}$ 1,8mm | A vide | 1392N | 1434N | *3%* |
| | $Rm_{corps\ du\ bouchon}$=290Mpa | Insertion totale de | 2270N | 2495N | *10%* |
| | pour Al 5056 état recuit Serrage S=0,29 Øbouchon=3,2 Øtige=1,8 | la tête de tige dans l'épaisseur du conteneur | | | |

Avantageusement, le procédé comporte une étape supplémentaire consistant à rompre la tige 41 du bouchon 20, après avoir au moins positionné en butée le nez 51 de la riveteuse contre la face supérieure 34a de la collerette 33 du bouchon 20. L'effort de rupture de la tige est supérieur à l'effort résultant de l'entrée et de la progression de la tête 42 du clou dans le tube.

De manière à ce qu'aucune portion de tige rompue ne prolonge le bouchon, ce qui constituerait une aspérité préjudiciable en surface du conteneur, il est avantageux de rompre la tige au voisinage le plus immédiat de la tête du clou.

A cet effet, la tige peut avantageusement comporter une zone de fragilisation 43 dont la section transversale est inférieure à la section transversale moyenne de la tige, de sorte que la rupture de la tige 41 intervient au niveau de ladite zone de fragilisation 43, pour des efforts de traction inférieurs à $M_{m41} * s_{41'}$.

Avec :

- $s_{41'}$ étant la section transversale de la tige après rupture en traction
- $R_{m41}$ étant la résistance mécanique à la rupture en traction de la tige

L'invention trouve avantageusement une application dans le cadre des accumulateurs du type par exemple Lithium-Ion. Le matériau constituant le conteneur est par exemple un grade classique d'aluminium et la paroi du conteneur à rendre étanche est un couvercle doté d'un orifice de remplissage en électrolyte. Cet orifice de remplissage est alors obturé de manière étanche vis-à-vis des liquides et des gaz.

De préférence, le couvercle admet une épaisseur e comprise entre $e_{min}$ égale à 1 et $e_{max}$ égale 3 mm et préférablement une épaisseur e comprise entre $e_{min}$ égale à 1,8 et $e_{max}$ égale 2,5 mm.

Avantageusement, les sections transversales respectivement du tube 30, de la tige 41, de la tête 42 du clou 40 et de l'orifice 12 sont elliptiques.

Plus avantageusement encore, les sections transversales respectivement du tube 30, de la tige 41, de la tête 42 du clou 40 et de l'orifice 12 sont circulaires.

Avantageusement, le diamètre de l'orifice 12 est compris entre 3,25 mm et 3,7 mm.

De manière à être compatible sur le plan électrochimique avec l'électrolyte et de manière à être suffisamment ductile, le tube 30 est de préférence en alliage d'aluminium « série 1000 ». On entend par alliage d'aluminium « série 1000 » les nuances d'aluminium recuit qui ne comportent pas d'éléments d'addition. Elles se distinguent par la présence plus ou moins importante d'impuretés. Usuellement, le troisième chiffre indique le degré de pureté en donnant la valeur de la première décimale à ajouter à 99 % (exemple : l'alliage 1050 contient 99,5 % d'aluminium).

La tige 41 devant admettre une dureté supérieure à celle du tube, elle est alors de préférence en acier. Bien entendu, la tige pourrait être constituée de tout matériau possédant une résistance à la rupture en traction située entre 600 et 1000 MPa.

De façon à ce que la tête du clou ne soit pas en contact avec l'électrolyte, le tube 30 est avantageusement obturé en son extrémité opposé à la collerette 33 par un opercule 32. D'autres alternatives peuvent aussi être envisagées comme par exemple celles qui consistent à revêtir la tête du clou d'un film compatible sur le plan électrochimique avec l'électrolyte.

Préférentiellement, la tête 42 du clou 40 s'étend suivant une longueur comprise entre 80% et 150% de la somme de l'épaisseur de la paroi du conteneur 1 et de l'épaisseur de la collerette 33. De cette façon, le plaquage du tube contre la paroi de l'orifice suivant l'axe longitudinal 100 est suffisamment assuré.

Des tests d'étanchéité ont été réalisés sur 30 couvercles de conteneurs en alliages d'Aluminium, 20 couvercles admettant une épaisseur de 1,8 mm et les 10 restants admettant une épaisseur de 2,5 mm. Pour chacun des 30 couvercles, les mêmes bouchons ont été utilisés, ces derniers comportant un tube en aluminium de série 1000 afin d'assurer une compatibilité suffisante avec l'électrolyte au potentiel de fonctionnement de l'électrode positive de l'accumulateur, et une déformation lors de l'expansion.

De préférence, l'électrolyte est un électrolyte liquide non aqueux comportant un sel de lithium dissous dans un solvant.

Le sel de lithium est choisi parmi le perchlorate de lithium $LiClO_4$, l'hexafluorophosphate de lithium $LiPF_6$, le tétrafluoroborate de lithium $LiBF_4$, le trifluorométhanesulfonate de lithium $LiCF_3SO_3$, le bis(fluorosulfonyl)imide de lithium $Li(FSO_2)_2N$ (LiFSI), le trifluorométhanesulfonimide de lithium $LiN(CF_3SO_2)_2$ (LiTFSI), le trifluorométhanesulfoneméthide de lithium $LiC(CF_3SO_2)_3$ (LiTFSM), le bisperfluoroéthylsulfonimide de lithium $LiN(C_2F_5SO_2)_2$ (LiBETI), le 4,5-dicyano-2-(trifluorométhyl) imidazolide de lithium (LiTDI), le bis(oxalatoborate) de lithium (LiBOB), le tris(pentafluoroethyl)trifluorophosphate de lithium $LiPF_3(CF_2CF_3)_3$ (LiFAP) et les mélanges des précédents.

De préférence, le solvant est un solvant ou un mélange de solvants choisi parmi les solvants organiques usuels notamment les carbonates cycliques saturés, les carbonates cycliques insaturés, les carbonates non cycliques, les esters d'alkyle, comme les formiates, les acétates, les propionates ou les butyrates, les éthers, les lactones comme la gamma-butyrolactone, le bioxyde de tétrahydrothiofène, les solvants nitriles, et les mélanges de ceux-ci. Parmi les carbonates cycliques saturés, on peut citer par exemple le carbonate d'éthylène (EC), le carbonate de fluoroéthylène (FEC), le carbonate de propylène (PC), le carbonate de butylène (BC), et les mélanges de ceux-ci. Parmi les carbonates cycliques insaturés, on peut citer par exemple le carbonate de vinylène (VC), ses dérivés et les mélanges de ceux-ci. Parmi les carbonates non cycliques, on peut citer par exemple le carbonate de diméthyle (DMC), le carbonate de diéthyle (DEC), le carbonate de méthyle éthyle (EMC), le carbonate de dipropyle (DPC) et les mélanges de ceux-ci. Parmi les esters d'alkyle, on peut citer par exemple l'acétate de méthyle, l'acétate d'éthyle, le propionate de méthyle, le propionate d'éthyle, le propionate de butyle, le butyrate de méthyle, le butyrate d'éthyle, le butyrate de propyle et les mélanges de ceux-ci. Parmi les éthers, on peut citer par exemple l'éther de diméthyle (DME) ou de diéthyle (DEE), et les mélanges de ceux-ci.

La matière électrochimiquement active peut être toute matière électrochimiquement active convenant pour une électrode positive d'un élément électrochimique lithium-ion. Les matières électrochimiquement actives suivantes conviennent particulièrement bien à la mise en oeuvre de l'invention:

- un composé i) de formule $Li_xMn_{1-y-z}M'_yM''_zPO_4$ (LMP) où M' et M" sont choisis dans le groupe consistant en B, Mg, Al, Si, Ca, Ti, V, Cr, Fe, Co, Ni, Cu, Zn, Y, Zr, Nb et Mo ; M' et M" étant différents l'un de l'autre; et $0,8 \leq x \leq 1,2$ ; $0 \leq y \leq 0,6$ ; $0 \leq z \leq 0,2$. Un exemple de ce composé est $LiMnPO_4$.
- un composé ii) de formule $Li_xM_{1-x-y-z-w}M'_yM''_zM'''_wO_2$ (LMO2) où M, M', M" et M''' sont choisis dans le groupe consistant en B, Mg, Al, Si, Ca, Ti, V, Cr, Mn, Fe, Co, Ni, Cu, Zn, Y, Zr, Nb, W et Mo à la condition qu'au moins M ou M' ou M" ou M''' soit choisi parmi Mn, Co, Ni, ou Fe ; M, M', M" et M''' étant différents les uns des autres; et $0,8 \leq x \leq 1,4$ ; $0 \leq y \leq 0,5$ ; $0 \leq z \leq 0,5$ ; $0 \leq w \leq 0,2$ et $x+y+z+w<2,2$. Des exemples de ce composé sont $LiNi_{1/3}Co_{1/3}Mn_{1/3}O_2$, $LiNi_{0,8}Co_{0,15}Al_{0,05}O_2$, $LiNi_{0,3}Mn_{0,5}Co_{0,15}Al_{0,05}O_2$ et $Li_{1,4}Mn_{0,4}Ni_{0,1}Co_{0,1}O_2$ dans lesquels Co, Ni et Mn peuvent être partiellement substitués par un ou plusieurs métaux de transition.
- un composé iii) de formule $Li_xMn_{2-y-z}M'_yM''_zO_4$ (LMO) où M' et M" sont choisis dans le groupe consistant en B, Mg, Al, Si, Ca, Ti, V, Cr, Fe, Co, Ni, Cu, Zn, Y, Zr, Nb et Mo ; M' et M" étant différents l'un de l'autre; et $1 \leq x \leq 1,4$ ; $0 \leq y \leq 0,6$ ; $0 \leq z \leq 0,2$. Un exemple de ce composé est la spinelle $LiMn_2O_4$.
- un composé iv) de formule $Li_xFe_{1-y}M_yPO_4$ (LFMP) où M est choisi dans le groupe consistant en B, Mg, Al, Si, Ca, Ti, V, Cr, Mn, Co, Ni, Cu, Zn, Y, Zr, Nb et Mo; et $0,8 \leq x \leq 1,2$ ; $0 \leq y \leq 0,6$. Un exemple de ce composé est $LiFePO_4$.
- un composé v) de formule $xLi_2MnO_3; (1-x)LiMO_2$ où M est choisi dans le groupe consistant en B, Mg, Al, Si, Ca, Ti, V, Cr, Mn, Co, Ni, Cu, Zn, Y, Zr, Nb et Mo et $x \leq 1$. Un exemple de ce composé est $Li_2MnO_3$.
- un composé vi) de formule $Li_a+y(M^1_{(1-t)}Mo_t)_2M^2_b(O_{1-x}F_{2x})_c$ dans laquelle :

    $M^1$ est choisi dans le groupe consistant en Ni, Mn, Co, Fe, V ou un mélange de ceux-ci ;
    $M^2$ est choisi dans le groupe consistant en B, Al, Si, P, Ti et Mo ;

    avec

$$4 \leq a \leq 6 \ ;$$

$$0 < b \leq 1,8 \ ;$$

$$3,8 \leq c \leq 14 \ ;$$

$$0 \leq x < 1 \ ;$$

$$-0,5 \leq y \leq 0,5 \ ;$$

$$0 \leq t \leq 0,9 \ ;$$

$$b/a < 0,45 \ ;$$

le coefficient c satisfaisant l'une des relations suivantes :

c= 4 + y/2 + z + 2t + 1,5b si M$^2$ est choisi parmi B et Al ;
c= 4 + y/2 + z + 2t + 2b si M$^2$ est choisi parmi Si, Ti et Mo ;
c= 4 + y/2 + z + 2t + 2,5b si M$^2$ est P ;

avec z=0 si M$^1$ est choisi parmi Ni, Mn, Co et Fe ; et
z=1 si M$^1$ est V. Des exemples de ce type de composé sont donnés dans le document FR-A-2 972 442.

- un composé vii) de formule Li$_{4+x}$MnM$^1$$_a$M$^2$$_b$O$_c$ dans laquelle :

M$^1$ est choisi dans le groupe consistant en Ni, Mn, Co, Fe et un mélange de ceux-ci ;
M$^2$ est choisi dans le groupe consistant en Si, Ti, Mo, B, Al et un mélange de ceux-ci ;

avec :

$$-1{,}2 \le x \le 3 \;;$$

$$0 < a \le 2{,}5 \;;$$

$$0 \le b \le 1{,}5 \;;$$

$$4{,}3 \le c \le 10 \;;$$

et

$$c = 4 + a + n.b + x/2$$

où

n= 2 lorsque M$^2$ est choisi dans le groupe consistant en Si, Ti, Mo ou un mélange de ceux-ci ; et
n=1,5 lorsque M$^2$ est choisi dans le groupe consistant en B, Al ou un mélange de ceux-ci. Des exemples de ce type de composé sont donnés dans la demande de brevet français FR 11/51899.

Parmi les matières électrochimiquement actives citées ci-avant, les composés suivants sont préférés:

- le composé v) ayant soit pour formule Li$_{1+x}$M$_{1-x}$O$_2$ dans laquelle M représente au moins un élément choisi parmi Ni, Co et Mn avec 0,1 <x< 0,4, soit pour formule LiNi$_{1-x}$M$^1$$_x$O$_2$ dans laquelle M' représente au moins un élément choisi parmi Co, Mn et Al et x $\le$ 0,66. Ce type de composé permet d'atteindre de fortes densités d'énergie massique.
- le composé iv) de formule LiFe$_x$Mn$_{1-x}$PO$_4$ avec 0<x<0,5. Ce type de composé a une énergie spécifique supérieure de 15% à celle de LiFePO$_4$. Cette énergie est obtenue grâce à un potentiel de fonctionnement supérieur à celui de LiFePO$_4$. LiFe$_x$Mn$_{1-x}$PO$_4$ conserve néanmoins la bonne stabilité thermique de LiFePO$_4$.

Le clou a été choisi en acier afin d'assurer une marge d'effort confortable pour que la casse de la tige n'intervienne qu'en butée contre le nez de la riveteuse et pas avant. Une riveteuse pneumatique standard a été utilisée. Bien entendu, d'autres types de riveteuses pourraient également convenir.

Ces tests d'étanchéité ont consisté à contrôler l'étanchéité à l'hélium avec un spectromètre de masse. Le taux de fuite d'hélium a été contrôlé à 20°C et à la pression ambiante.

Dans chacun des cas et comme le montre le tableau ci-après pour 10 couvercles, le taux de fuite d'Hélium s'est avéré inférieur à 1.10$^{-7}$ atm.cm$^3$/s.

| N° Echantillon | Taux de fuite Hélium (atm.cm3/s) |
|---|---|
| Echantillon 1 | 2,4E-08 |

(suite)

| N° Echantillon | Taux de fuite Hélium (atm.cm3/s) |
|---|---|
| Echantillon 2 | 2,8E-08 |
| Echantillon 3 | 2,8E-08 |
| Echantillon 4 | 3,1E-08 |
| Echantillon 5 | 3,5E-08 |
| Echantillon 6 | 7,0E-08 |
| Echantillon 7 | 8,5E-08 |
| Echantillon 8 | 8,7E-08 |
| Echantillon 9 | 2,5E-08 |
| Echantillon 10 | 3,7E-08 |

Aux vues de ces résultats, il apparaît que l'invention permet de rendre étanche de manière fiable les orifices de remplissage des conteneurs.

Le procédé selon l'invention est avantageusement simplifié par le fait qu'il ne nécessite qu'une simple pièce, soit un bouchon constitué d'un clou logé dans un tube. Il n'est en effet pas nécessaire d'adjoindre des rondelles et autre joint d'étanchéité. On entend par joints d'étanchéité, tout apport d'élément assurant la fonction d'étanchéité.

Le procédé selon l'invention présente également l'avantage de pouvoir être mis en oeuvre sur des épaisseurs de paroi de conteneur particulièrement faibles, soit pouvant être de l'ordre de 1 mm.

**Revendications**

1. Procédé pour obturer de manière étanche au moyen d'un bouchon (20) un orifice (12) de remplissage ménagé sur une paroi (11) d'un conteneur d'accumulateur (1), ledit bouchon comprenant :

   - un tube (30), ledit tube étant doté en l'une de ses extrémités d'une collerette (33) ayant une face supérieure (34a) apte à recevoir un nez (50) de riveteuse et une face inférieure (34b) pouvant servir à recouvrir l'orifice, et
   - un clou (40) pourvu d'une tige (41) s'achevant par une tête (42), la tige étant logée dans le tube et la tête étant située à une extrémité du clou, opposée à la collerette (33), ladite tête du clou ayant une section transversale comprise entre la section transversale intérieure ($s30_{int}$) et la section transversale extérieure ($s30_{ext}$) du tube (30), le matériau constituant la tige (41) admettant une dureté supérieure ou égale à trois fois la dureté du matériau constituant le tube (30),

   ledit procédé comprenant les étapes consistant à :

   - introduire le bouchon (20) à l'intérieur de l'orifice (12), la section transversale de l'orifice (12) étant supérieure à la section transversale extérieure ($s30_{ext}$) du tube (30) de manière à définir volontairement un espace (m) entre la paroi de l'orifice (12) et la paroi extérieure du tube (30),
   - positionner en butée le nez (50) de la riveteuse contre la face supérieure (34a) de la collerette (33) du bouchon (20),
   - actionner la riveteuse de manière à exercer une traction sur la tige (41) du clou (40), le nez (50) de la riveteuse maintenant le tube (30) à l'intérieur de l'orifice (12),

   le procédé étant **caractérisé en ce que** la riveteuse est actionnée de manière à :

   • provoquer l'expansion du tube (30) contre la paroi de l'orifice (12) par l'entrée et la progression de la tête (42) du clou dans le tube et,
   • combler l'espace (m) entre la paroi de l'orifice (12) et la paroi extérieure du tube (30) par la progression et le maintien de la tête (42) du clou dans le tube au niveau de la paroi du conteneur d'accumulateur ;

   le matériau constituant la paroi du conteneur d'accumulateur admettant une dureté supérieure ou égale à 1,3 fois celle du tube (30).

**2.** Procédé pour obturer de manière étanche un orifice de remplissage selon la revendication précédente, **caractérisé en ce qu'**il comporte une étape supplémentaire consistant à rompre la tige (41) du bouchon (20), après avoir au moins positionné en butée le nez (50) de riveteuse contre la face supérieure (34a) de la collerette (33) du bouchon (20), l'effort de rupture de la tige étant supérieure à l'effort résultant de l'entrée et de la progression de la tête (42) du clou dans le tube et la section ($s_{50}$) de la riveteuse étant inférieure à la section ($s_{42}$) de la tête du clou.

**3.** Procédé pour obturer de manière étanche un orifice de remplissage selon l'une quelconque des revendications précédentes, **caractérisé en ce que** l'espace m avant l'expansion du tube (30) correspond à la différence entre le diamètre de l'orifice et le diamètre extérieur du tube, celle étant supérieure à 0,05 mm.

**4.** Procédé pour obturer de manière étanche un orifice de remplissage selon l'une quelconque des revendications précédentes, **caractérisé en ce que** la tige comporte une zone de fragilisation (43) de section transversale inférieure à la section transversale moyenne de la tige, de sorte que la rupture de la tige (41) intervient au niveau de ladite zone de fragilisation (43), pour des efforts de traction inférieurs à $R_{m41}$ * s41'.
Avec :

- s41' : section transversale de la tige après rupture en traction
- $R_{m41}$ : résistance mécanique à la rupture en traction de la tige

**5.** Procédé pour obturer de manière étanche un orifice de remplissage selon l'une quelconque des revendications précédentes, **caractérisé en ce que** la tige (41) est en acier.

**6.** Procédé pour obturer de manière étanche un orifice de remplissage selon l'une quelconque des revendications précédentes, **caractérisé en ce que** le tube (30) est en alliage d'aluminium, de préférence en alliage d'aluminium « série 1000 ».

**7.** Procédé pour obturer de manière étanche un orifice de remplissage selon l'une quelconque des revendications précédentes, **caractérisé en ce que** le tube (30) est obturé en son extrémité opposée à la collerette (33) par un opercule (32).

**8.** Procédé pour obturer de manière étanche un orifice de remplissage selon l'une quelconque des revendications précédentes, **caractérisé en ce que** la tête (42) du clou (40) s'étend suivant une longueur comprise entre 80% et 150% de la somme de l'épaisseur de la paroi du conteneur d'accumulateur (1) et de l'épaisseur de la collerette (33).

**9.** Procédé pour obturer de manière étanche un orifice de remplissage, selon l'une quelconque des revendications précédentes, **caractérisé en ce que** la face (51) du nez (50) de la riveteuse et la surface (34) de la collerette (33) du bouchon (20), sont planes.

**10.** Procédé pour obturer de manière étanche un orifice de remplissage, selon l'une quelconque des revendications 1 à 8, **caractérisé en ce que** la face (51) du nez (50) de la riveteuse comprend une partie saillante (55) de forme complémentaire à un évidement (35) pratiqué sur la face supérieure (34a) de la collerette (33) du bouchon (20).

**11.** Procédé pour obturer de manière étanche un orifice de remplissage, selon l'une quelconque des revendications précédentes, **caractérisé en ce que** la paroi du conteneur d'accumulateur admet une épaisseur comprise entre 1 et 3 mm et préférablement entre 1,8 et 2,5 mm.

**12.** Procédé pour obturer de manière étanche un orifice de remplissage, selon l'une quelconque des revendications précédentes, **caractérisé en ce que** le conteneur d'accumulateur (1) est en aluminium.

**13.** Procédé pour obturer de manière étanche un orifice de remplissage, selon l'une quelconque des revendications précédentes, **caractérisé en ce que** les sections transversales respectivement du tube (30), de la tige (41), de la tête (42) du clou (40) et de l'orifice (12) sont elliptiques.

**14.** Procédé pour obturer de manière étanche un orifice de remplissage, selon la revendication précédente, **caractérisé en ce que** les sections transversales respectivement du tube (30), de la tige (41), de la tête (42) du clou (40) et de l'orifice (12) sont circulaires.

**15.** Procédé pour obturer de manière étanche un orifice de remplissage, selon la revendication précédente, **caractérisé en ce que** le diamètre de l'orifice (12) est compris entre 3,25 et 3,7 mm.

**16.** Procédé pour obturer de manière étanche un orifice de remplissage, selon l'une quelconque des revendications précédentes, **caractérisé en ce que** la paroi du conteneur d'accumulateur (1) est un couvercle de conteneur d'accumulateur, l'orifice de remplissage (12) étant un orifice de remplissage en électrolyte.

**17.** Procédé pour obturer de manière étanche un orifice de remplissage, selon la revendication précédente, **caractérisé en ce que** l'accumulateur est un accumulateur de type Lithium-Ion.

**18.** Procédé pour obturer de manière étanche un orifice de remplissage, selon l'une quelconque des revendications précédentes, **caractérisé en ce que** le bouchon (20) et le conteneur d'accumulateur (1) vérifient les relations ci-après :

- $s_{41} < s_{30int} < s_{42} < s_{30ext} < s_{12}$
$s_{42} - s_{41} > s_{12} - s_{30ext}$
- $R_{m41} * s_{41'} > 7 * R_{m30} * e * (s_{42} - s_{41} + s_{30ext} - s_{12})/2 + 0.9 R_{m30} * (s_{30ext} - s_{41})$

Avec :

- $s_{41}$, $s_{41'}$, $s_{30int}$, $s_{42}$, $s_{30ext}$, $s_{12}$ respectivement les sections transversales de la tige avant et après rupture en traction, du tube (intérieur), de la tête du clou, du tube (extérieur), de l'orifice.
- e : épaisseur du conteneur d'accumulateur
- $R_{m30}$ et $R_{m41}$ : résistance mécanique à la rupture en traction

**19.** Procédé pour obturer de manière étanche un orifice de remplissage, selon l'une quelconque des revendications précédentes, **caractérisé en ce que** le bouchon est constitué du tube et du clou uniquement.

**20.** Conteneur (1) d'accumulateur muni d'un orifice de remplissage d'électrolyte, **caractérisé en ce que** l'orifice de remplissage est obturé de manière étanche vis-à-vis des liquides et des gaz au moyen d'un procédé conforme à l'une quelconque des revendications 1 à 19.

**Patentansprüche**

**1.** Verfahren, um eine Einfüllöffnung (12), die an einer Wand (11) eines Akkumulatorbehälters (1) angeordnet ist, mittels eines Stopfens (20) abzuddichten, wobei der Stopfen Folgendes umfasst:

- ein Rohr (30), wobei das Rohr an einem seiner Enden mit einem Flansch (33) versehen ist, der eine Oberseite aufweist (34a), die geeignet ist, eine Nase (50) einer Nietmaschine aufzunehmen, und eine Unterseite (34b), die zum Abdecken der Öffnung dienen kann, und
- einen Nagel (40), der mit einem Schaft (41) versehen ist, welcher mit einem Kopf (42) endet, wobei der Schaft in dem Rohr untergebracht und der Kopf an einem Ende des Nagels dem Flansch (33) gegenüberliegend angeordnet ist, wobei der Kopf des Nagels einen Querschnitt hat, der zwischen dem Innenquerschnitt ($s30_{int}$) und dem Außenquerschnitt ($s30_{ext}$) des Rohrs (30) liegt, wobei das Material, aus dem das Rohr (41) besteht, eine Härte zulässt, die größer oder gleich dreimal die Härte des Materials aus dem das Rohr (30) besteht zulässt,

wobei das Verfahren die folgenden Schritte umfasst die darin bestehen:

- den Stopfen (20) in die Öffnung (12) einzuführen, wobei der Querschnitt der Öffnung (12) größer als der Außenquerschnitt ($s30_{ext}$) des Rohrs (30) ist, um somit absichtlich einen Raum (m) zwischen der Wand der Öffnung (12) und der Außenwand des Rohrs (30) zu definieren,
- die Nase (50) der Nietmaschine an der Oberseite (34a) des Flansches (33) des Stopfens (20) in Anschlag anzuordnen,
- die Nietmaschine zu betätigen, um einen Zug auf den Schaft (41) des Nagels (40) auszuüben, wobei die Nase (50) der Nietmaschine das Rohr (30) innerhalb der Öffnung (12) hält,

wobei das Verfahren **dadurch gekennzeichnet ist, dass** die Nietmaschine betätigt wird, um:

• die Rohrerweiterung (30) gegen die Wand der Öffnung (12) durch das Eintreten und das Fortschreiten des Nagelkopfs (42) in dem Rohr hervorzurufen, und

• den Raum (m) zwischen der Wand der Öffnung (12) und der Außenwand des Rohrs (30) durch das Fortschreiten und Halten des Nagelkopfs (42) im Rohr auf Höhe der Wand des Akkumulatorbehälters auszufüllen;

wobei das Material, aus dem die Wand des Akkumulatorbehälters besteht, eine Härte größer oder gleich 1,3-mal jener des Rohrs (30) zulässt.

2. Verfahren für die Abdichtung einer Einfüllöffnung nach dem vorhergehenden Anspruch, **dadurch gekennzeichnet, dass** es einen zusätzlichen Schritt umfasst, der darin besteht, den Schaft (41) des Stopfens (20) zu brechen, nachdem zumindest die Nase (50) einer Nietmaschine an die Oberseite (34a) des Flansches (33) des Stopfens (20) in Anschlag angeordnet worden ist, wobei die Kraft zum Brechen des Schafts größer als die Kraft ist, die sich aus dem Eintreten und Fortschreiten des Nagelkopfs (42) in dem Rohr ergibt, und wobei der Querschnitt ($s_{50}$) der Nietmaschine kleiner als der Querschnitt ($s_{42}$) des Nagelkopfs (42) ist.

3. Verfahren für die Abdichtung einer Einfüllöffnung nach einem der vorhergehenden Ansprüche, **dadurch gekennzeichnet, dass** der Raum m vor der Rohrerweiterung (30) der Differenz zwischen dem Durchmesser der Öffnung und dem Außendurchmesser des Rohrs entspricht, wobei diese größer als 0,05 mm ist.

4. Verfahren für die Abdichtung einer Einfüllöffnung nach einem der vorhergehenden Ansprüche, **dadurch gekennzeichnet, dass** der Schaft einen Schwächungsbereich (43) mit einem kleineren Querschnitt als der durchschnittliche Querschnitt der Stange aufweist, so dass der Bruch des Schafts (41) im Bereich des Schwächungsbereichs (34), bei Zugkräften unter $R_{m41}$*s41' stattfindet.
Wobei:

- s41': der Querschnitt des Schafts nach Zugbruch ist
- $R_{m41}$ : die mechanische Zugfestigkeit des Schafts ist

5. Verfahren für die Abdichtung einer Einfüllöffnung nach einem der vorhergehenden Ansprüche, **dadurch gekennzeichnet, dass** der Schaft (41) aus Stahl ist.

6. Verfahren für die Abdichtung einer Einfüllöffnung nach einem der vorhergehenden Ansprüche, **dadurch gekennzeichnet, dass** das Rohr (30) aus Aluminiumlegierung, vorzugsweise aus Aluminiumlegierung "Serie 1000" ist.

7. Verfahren für die Abdichtung einer Einfüllöffnung nach einem der vorhergehenden Ansprüche, **dadurch gekennzeichnet, dass** das Rohr (30) an seinem, dem Flansch (33) gegenüberliegenden Ende durch einen Deckel (32) verschlossen ist.

8. Verfahren für die Abdichtung einer Einfüllöffnung nach einem der vorhergehenden Ansprüche, **dadurch gekennzeichnet, dass** der Kopf (42) des Nagels (40) sich über eine Länge erstreckt, die zwischen 80 % und 150 % der Summe der Dicke der Wand des Akkumulatorbehälters (1) und der Dicke des Flansches (33) liegt.

9. Verfahren für die Abdichtung einer Einfüllöffnung nach einem der vorhergehenden Ansprüche, **dadurch gekennzeichnet, dass** die Fläche (51) der Nase (50) der Nietmaschine und die Oberfläche (34) des Flansches (33) des Stopfens (20) eben sind.

10. Verfahren für die Abdichtung einer Einfüllöffnung nach einem der vorhergehenden Ansprüche, **dadurch gekennzeichnet, dass** die Fläche (51) der Nase (50) der Nietmaschine einen komplementar geformten Vorsprung (55) einer Ausnehmung (35) umfasst, die auf der Oberseite (34a) des Flansches (33) des Stopfens (20) vorgesehen ist.

11. Verfahren für die Abdichtung einer Einfüllöffnung nach einem der vorhergehenden Ansprüche, **dadurch gekennzeichnet, dass** die Wand des Akkumulatorbehälters eine Dicke zwischen 1 und 3 mm und vorzugsweise zwischen 1,8 und 2,5 mm zulässt.

12. Verfahren für die Abdichtung einer Einfüllöffnung nach einem der vorhergehenden Ansprüche, **dadurch gekennzeichnet, dass** der Akkumulatorbehälter (1) aus Aluminium ist.

13. Verfahren für die Abdichtung einer Einfüllöffnung nach einem der vorhergehenden Ansprüche, **dadurch gekenn-**

**zeichnet, dass** die jeweiligen Querschnitte des Rohrs (30), des Schafts (41), des Kopfes (42) des Nagels (40) und der Öffnung (12) elliptisch sind.

14. Verfahren für die Abdichtung einer Einfüllöffnung nach einem der vorhergehenden Ansprüche, **dadurch gekennzeichnet, dass** die jeweiligen Querschnitte des Rohrs (30), des Schafts (41), des Kopfes (42) des Nagels (40) und der Öffnung (12) kreisförmig sind.

15. Verfahren für die Abdichtung einer Einfüllöffnung nach einem der vorhergehenden Ansprüche, **dadurch gekennzeichnet, dass** der Durchmesser der Öffnung (12) zwischen 3,25 und 3,7 mm beträgt.

16. Verfahren für die Abdichtung einer Einfüllöffnung nach einem der vorhergehenden Ansprüche, **dadurch gekennzeichnet, dass** die Wand des Akkumulatorbehälters (1) ein Akkumulatorbehälterdeckel ist, wobei die Einfüllöffnung (12) eine Öffnung zur Elektrolytfüllung ist.

17. Verfahren für die Abdichtung einer Einfüllöffnung nach einem der vorhergehenden Ansprüche, **dadurch gekennzeichnet, dass** der Akkumulator ein Lithium-Ionen-Akkumulator ist.

18. Verfahren für die Abdichtung einer Einfüllöffnung nach einem der vorhergehenden Ansprüche, **dadurch gekennzeichnet, dass** der Stopfen (20) und der Akkumulatorbehälter (1) die folgenden Verhältnisse erfüllen:

- $s_{41} < s_{30int} < s_{42} < s_{30ext} < s_{12}$
- $s_{42} - s_{41} > s_{12} - s_{30ext}$
- $R_{m41} * s_{41'} > 7 * R_{m30} * e * (s_{42} - s_{41} + s_{30ext} - s_{12})/2 + 0.9 Rm30 * (s_{30ext} - S_{41})$.

Wobei:

- $s_{41}$, $s_{41'}$, $s_{30int}$, $s_{42}$, $s_{30ext}$, $S_{12}$ jeweils die Querschnitte des Schafts vor und nach dem Zugbruch, des (inneren) Rohrs, des Nagelkopfs, des (äußeren) Rohrs, der Öffnung sind,
- e: die Dicke des Akkumulatorbehälters ist,
- $R_{m30}$ und $R_{m41}$ : die mechanische Zugfestigkeit des Schafts sind.

19. Verfahren für die Abdichtung einer Einfüllöffnung nach einem der vorhergehenden Ansprüche, **dadurch gekennzeichnet, dass** der Stopfen ausschließlich von dem Rohr und dem Nagel gebildet ist.

20. Akkumulatorbehälter (1), der mit einer Öffnung zur Elektrolytfüllung versehen ist, **dadurch gekennzeichnet, dass** die Einfüllöffnung mittels eines Verfahrens nach einem der Ansprüche 1 bis 19 gegen Flüssigkeiten und Gase abgedichtet ist.

**Claims**

1. A method for sealing in a leak-proof manner a filling orifice (12) formed on a wall (11) of a secondary cell container (1) using a stopper arrangement (20), said stopper arrangement comprising:

   - a tubular member (30), said tubular member being provided at one of its ends with a flange (33) having an upper face (34a) adapted to receive a nosepiece (50) of a riveting tool and a lower face (34b) adapted to cover the orifice, and
   - a mandrel (40) provided with a stem (41) terminating with a head (42), the stem being housed inside the tubular member and the head being located at one end of the mandrel, opposite the flange (33), said mandrel head having a cross section that is comprised between the inside cross section ($s30_{int}$) and the outer cross section ($s30_{ext}$) of the tubular member (30), the material constituting the stem (41) having a hardness that is equal to or greater than three times the hardness of the material constituting the tubular member (30),

   said method comprising the steps of:

   - introducing the stopper arrangement (20) into the orifice (12), the cross section of the orifice (12) being greater than the outer cross section ($s30_{ext}$) of the tubular member (30) so as to intentionally define a gap (m) between the wall of the orifice (12) and the outer wall of the tubular member (30),

- bringing the nosepiece (50) of the riveting tool into abutment with the upper face (34a) of the flange (33) of the stopper arrangement (20),
- actuating the riveting tool so as to exert a tensile force on the stem (41) of the mandrel (40), the nosepiece (50) of the riveting tool maintaining the tubular member (30) in the orifice (12),

the method being **characterized in that** the riveting tool is operated such as to:

• bring about expansion of the tubular member (30) against the wall of the orifice (12) by the entrance and advance of the head (42) of the mandrel inside the tubular member and,
• close the gap (m) between the wall of the orifice (12) and the outer wall of the tubular member (30) by the advance and maintenance of the head (42) of the mandrel inside the tubular member at the wall of the secondary cell container,

the material constituting the secondary cell container wall having a hardness greater than or equal to 1.3 times that of the tubular member (30),

2. The method for sealing a filling orifice in a leak-proof manner according to the preceding claim, **characterized in that** it comprises an additional step of rupturing the stem (41) of the stopper arrangement (20), after having at least positioned the nosepiece (50) of the riveting tool in abutment with the upper face (34a) of the flange (33) of the stopper arrangement (20), the force necessary for rupturing the stem being greater than the force resulting from the entry and advancement of the head (42) of the mandrel inside the tubular member and the cross section ($s_{50}$) of the riveting tool being smaller than the cross section ($s_{42}$) of the mandrel head.

3. The method for sealing a filling orifice in a leak-proof manner according to any one of the preceding claims, **characterized in that** the gap (m) prior to expansion of the tubular member (30) corresponds to the difference between the diameter of the orifice and the outside diameter of the tubular member, this being greater than 0.05 mm.

4. The method for sealing a filling orifice in a leak-proof manner according to any one of the preceding claims, **characterized in that** the stem comprises a region of weakness (43) of smaller cross section than the average cross section of the stem, so that the fracture of the stem (41) occurs at said weakened region (43) for tensile forces less than $R_{m41}$ * s41'
in which:

- s41' corresponds to the cross section of the stem after fracture under tensile stress,
- $R_{m41}$ is the ultimate tensile strength of the stem.

5. The method for sealing a filling orifice in a leak-proof manner according to any one of the preceding claims, **characterized in that** the stem (41) is made of steel.

6. The method for sealing a filling orifice in a leak-proof manner according to any one of the preceding claims, **characterized in that** the tubular member (30) is of aluminum alloy, preferably "1000 Series" aluminum alloy.

7. The method for sealing a filling orifice in a leak-proof manner according to any one of the preceding claims, **characterized in that** the tubular member (30) is sealed at its end opposite the flange (33) by a cover (32).

8. The method for sealing a filling orifice in a leak-proof manner according to any one of the preceding claims, **characterized in that** the head (42) of the mandrel (40) extends along a length comprised between 80% and 150% of the sum of the thickness of the secondary cell container wall (1) and the thickness of the flange (33).

9. The method for sealing a filling orifice in a leak-proof manner according to any one of the preceding claims, **characterized in that** the face (51) of the nosepiece (50) of the riveting tool and the surface (34) of the flange (33) of the stopper arrangement (20) are planar.

10. The method for sealing a filling orifice in a leak-proof manner according to any one of claims 1 to 8, **characterized in that** the face (51) of the nosepiece (50) of the riveting tool comprises a projection (55) of a shape that is complementary to that of a recess (35) formed on the upper face (34a) of the flange (33) of the stopper arrangement (20).

11. The method for sealing a filling orifice in a leak-proof manner according to any one of the preceding claims, **char-**

**acterized in that** the secondary cell container wall has a thickness of between 1 and 3 mm and preferably between 1.8 and 2.5 mm.

12. The method for sealing a filling orifice in a leak-proof manner according to any one of the preceding claims, **characterized in that** the secondary cell container (1) is of aluminum.

13. The method for sealing a filling orifice in a leak-proof manner according to any one of the preceding claims, **characterized in that** the cross sections of respectively the tubular member (30), of the stem (41), of the head (42) of the mandrel (40) and of the orifice (12) are elliptical.

14. The method for sealing a filling orifice in a leak-proof manner according to the preceding claim, **characterized in that** the cross sections of respectively the tubular member (30), of the stem (41), of the head (42), of the mandrel (40) and of the orifice (12) are circular.

15. The method for sealing a filling orifice in a leak-proof manner according to the preceding claim, **characterized in that** the diameter of the orifice (12) is between 3.25 and 3.7 mm.

16. The method for sealing a filling orifice in a leak-proof manner according to any one of the preceding claims, **characterized in that** the wall of the secondary cell container (1) is a cover of a secondary cell container, the filling orifice (12) being an electrolyte filling orifice.

17. The method for sealing a filling orifice in a leak-proof manner according to the preceding claim, **characterized in that** the secondary cell is a lithium-ion type cell.

18. The method for sealing a filling orifice in a leak-proof manner according to any one of the preceding claims, **characterized in that** the stopper arrangement (20) and the secondary cell container (1) satisfy the following relationships:

- $s_{41} < s_{30int} < s_{42} < s_{30ext} < s_{12}$
$s_{42} - s_{41} > s_{12} - s_{30ext}$
- $R_{m41} * s_{41'} > 7 * R_{m30} * e * (s_{42} - s_{41} + s_{30ext} - s_{12})/2 + 0.9\, R_{m30} * (s_{30ext} - s_{41})$

in which:

- $s_{41}$, $s_{41'}$, $s_{30int}$, $s_{42}$, $s_{30ext}$, $s_{12}$ are respectively the cross sections of the stem prior to and after fracture under tensile stress, of the tubular member (inside cross section), of the mandrel head, of the tubular member (outside cross section) and of the orifice,
- e: thickness of the secondary cell container
- $R_{m30}$ and $R_{m41}$ : ultimate tensile strengths.

19. The method for sealing a filling orifice in a leak-proof manner according to any one of the preceding claims, **characterized in that** the stopper arrangement is made up solely of the tubular member and the mandrel.

20. A container (1) for a secondary cell provided with a cell electrolyte filling orifice, **characterized in that** the filling orifice is closed in a leak-proof manner vis-a-vis liquids and gases by means of a method according to any one of claims 1 to 19.

**Fig. 1**

**Fig. 2**

**Fig. 3A**

**Fig. 3B**

Fig. 4

Fig. 5

$y = 5100x + 542.67$
$R^2 = 0.9788$

◆ Série 1
— Linéaire (Série 1)

Fig. 6

$y = 191.77x + 459.24$

◆ Série 1
— Linéaire (Série 1)

$y = 7.6316x + 136.84$

Fig. 7

$y = 94.702x - 21.352$
$R^2 = 0.9898$

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 102299273
- EP 685895 A
- US 4215187 A
- US 4006282 A
- DE 112011105667 T5
- FR 2972442 A
- FR 1151899